# EUROPEAN PATENT APPLICATION

(11) **EP 1 289 243 A1**
(43) Date of publication of application: **05.03.2003**
(21) Application number: 02255702.9
(22) Date of filing: 15.08.2002
(51) Int. Cl.: H04M 3/493, H04L 29/12

(54) **System and method for implementing an Interactive Voice Response (IVR) system based on the LDAP protocol**

(30) Priority: 31.08.2001 US 945351
(71) Applicant: Openwave Systems Inc., Redwood City, CA 94063 (US)
(72) Inventor: Gallagher, Sean, Shrewsbury, NJ 07724 (US)
(74) Representative: Jackson, Richard Eric

(57) **Abstract**

The specification discloses a system and method for providing a Lightweight Directory Application Protocol (LDAP) version of a telephone user interface, such as Interactive Voice Response (IVR). A user's telephone number corresponds to an entry in the LDAP directory. The directory entry maps the telephone number to other entries in the directory. The directory entries provide log-in, password and menu prompts for the user. Each user can customize his user interface by modifying the directory entry.

## Description

### TECHNICAL FIELD

The present invention is directed generally to a system and method for providing a user interface and, in particular, to a system and method for using Lightweight Directory Access Protocol (LDAP) directory entries to customize menus and prompts for an Interactive Voice Response (IVR) interface for a telephone system.

### BACKGROUND OF THE INVENTION

The Lightweight Directory Access Protocol (LDAP) is a software protocol that enables users to locate resources, such as files and devices, on a network. The network may be of any size including, for example, a wide area, global computer network, such as the Internet, or a corporate Intranet. LDAP is a "lightweight" or smaller version of Directory Access Protocol (DAP), which is part of the X.500 standard for directory services in a network.

In a network, a directory tells users where in the network resources are located. For example, on Transmission Control Protocol/Internet Protocol (TCP/IP) networks, such as the Internet, the Domain Name System (DNS) is the directory system that is used to relate a domain name to the specific network address. However, in DNS users must know the domain name that they are seeking. LDAP allows users to search for a resource without knowing where it is located. LDAP also runs over TCP/IP.

An LDAP directory is organized in a hierarchical tree structure. The hierarchy consists of the following levels: a root directory; countries branching from the root directory; organizations branching from the countries, organizational units (departments, divisions, etc.) branching out from the organizations, and individuals (resources, files, people, etc.) branching out from the organizational units. The LDAP directory may be distributed among many servers. Replication is used to synchronize the directory on separate servers.

LDAP is well known and one of skill in the art would be expected to be familiar with the protocol. For a description of LDAP messages and operations, reference is made to Request for Comments: 1777 (RFC-1777), March 1995,
http://www.intranetjournal.com/RFC/rfc-1777.html, the disclosure of which is hereby incorporated by reference herein.

The LDAP directory service model is based upon entries. Each entry is a collection of *attributes.* An entry has a name, called a *distinguished name* ("dn") that is used to uniquely refer to an entry. Each attribute of an entry has a *type* and one or more *values.* The types are typically mnemonic strings, such as "cn" for common name. The corresponding value depends upon the type of attribute.

The basic form of an LDAP text entry is:
dn: <distinguished name>
cn: <common name>
<attribute type>: <attribute value>
<attribute type>: <attribute value>

LDAP allows users to control which attributes are required or allowed in an entry using the *objectclass* attribute. The values of the objectclass attribute determine the schema rules that the entry must obey.

LDAP provides operations for searching and updating the directory. Operations are also provided for adding, deleting, and changing entries. The LDAP search feature allows the directory to be searched for entries that match criteria specified in a search filter. Information can be requested from each entry that matches the criteria.

Interactive Voice Response (IVR) systems use menus to let users navigate through the system by responding to a series of prompts, such as by pressing a key to send a DTMF tone or by speaking a response. IVR menus are difficult to customize in a large distributed system.

It is an object of the present invention to provide a user interface using LDAP.

It is a further object of the invention to use LDAP to provide a unique IVR menu interface for a user.

### BRIEF SUMMARY OF THE INVENTION

The present invention is directed to a system and method that provides an LDAP representation of a user interface, such as an IVR menu. Each menu, including any associated prompt, response or action, is represented as a directory entry. A LDAP directory entry is also created for each user. The user's telephone number may be linked to the directory entry. This entry would include instructions for mapping the user's profile to other entries in the directory.

The user directory entries allow for a customized user interface or IVR menu for each user. For example, the available options and the prompt for each option could be selected by the user. The desired options and prompts can be identified in the user's user directory entry. This allows the user to configure the LDAP menu representation to select a customized user interface or IVR menu.

When a user accesses a system incorporating the present invention, the system first presents a log-in menu that is selected using either user-supplied information or automatically detected call information, such as a called or calling number. For example, one group of users may be identified and presented with a first log-in menu based upon the dial-in number that they use; while a second group of users, who use another dial-in number, may be presented with a second log-in menu. Individual users that are identified by the user's calling number, such as numbers identified by caller ID, may be presented with more individualized log-in menus.

The format of the log-in menu and the prompts that are presented to the user are preferably determined from a log-in menu LDAP directory entry. The user is prompted to provide additional information at the log-in menu. From this information, the user's account is identified. The user's account information is preferably stored in another LDAP directory entry. The attributes of the user account directory entry are used to customize or personalize the user interface for the system. For example, if the system is a messaging system, the user interface can be adapted or modified to only present options or offer services for which a particular user subscribes.

It is an advantage of the present invention to provide an LDAP representation of a telephone user interface for a messaging system.

It is a further advantage of the present invention to provide an LDAP representation of an interactive voice response menu.

Each user has the ability to configure a unique set of options and prompts that will be presented to the user. Accordingly, it is another advantage of the present invention to provide a customized user interface on a per-user basis.

The foregoing has outlined rather broadly the features and technical advantages of the present invention in order that the detailed description of the invention that follows may be better understood. The additional features and advantages of the invention described hereinafter form the subject matter of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:
FIGURE 1 is block diagram of a messaging system employing the present invention;
FIGURE 2 is an exemplary top level menu used in one embodiment of the present invention;
FIGURE 3 is an exemplary log-in prompt for one embodiment of the present invention;
FIGURE 4 is an exemplary user entry for one embodiment of the present invention;
FIGURE 5 is an exemplary password prompt for one embodiment of the present invention;
FIGURE 6 is an exemplary main menu used in one embodiment of the present invention; and
FIGURE 7 is a flowchart that illustrates the steps of implementing the invention in one embodiment.

### DETAILED DESCRIPTION

The present invention is directed to a customizable user interface that is realized using the Lightweight Directory Access Protocol. In a preferred embodiment, the user interface is part of unified messaging system that provides voice mail, e-mail, and fax message services to users. Typical messaging systems use an Interactive Voice Response (IVR) user interface, wherein users are prompted to press certain telephone keys or to speak certain responses in order to log-in to the system or to retrieve messages. The user interface may be hard coded in software that is running on the messaging system, or the system may use templates or scripts to provide a user interface menu. These types of menus are difficult to update or customize.

Using the LDAP menus of the present invention, the user interface can easily be customized or modified. As a result, a customized interface can be presented to each user. The LDAP menus can be implemented using a mark-up language, such as VXML. Each menu, such as prompts, expected responses and actions, is represented as an LDAP directory entry. Each prompt and response set is represented as an attribute in the directory entry. These attributes have the form: <numeric option>&<boolean operator>&<announcement to play>&<action to take>.

In one embodiment, a browser receives an incoming VXML query from a gateway server, which then looks up a root Telephone User Interface (TUI) entry. This entry would have instructions for mapping incoming telephone numbers to other directory entries in the system. The mapping could be as simple as executing an LDAP search for a telephone number and then jumping to the entry containing that telephone number. The new entry might then direct the user to enter a password using the telephone key pad. The system would then load the user's profile data, including a personalized top-level TUI menu. At each command, the system either executes a task, jumps to another directory entry, or both.

Customized menus may be constructed on a per-user basis and may be placed in a directory tree below the user's message account. In that way, the user's custom telephone interface is totally unique and is completely under the user's control. One of skill in the art would understand that LDAP also provides security and authentication mechanisms that could be used in the present invention.

LDAP provides distributed directory services, thus any changes to the user interface are automatically pushed to other parts of the network along with user profile data.

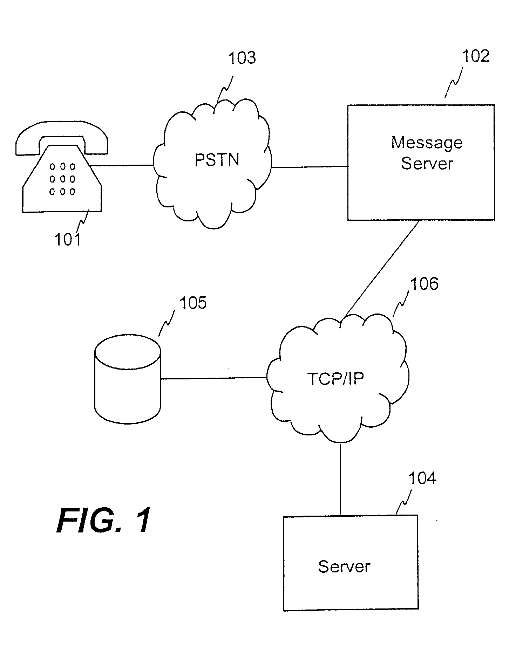

Figure 1 is a block diagram of a messaging system incorporating the LDAP user interface menus of the present invention. Users access the messaging system via telephone 101, which is connected to messaging system 102 via Public Switched Telephone Network (PSTN) 103. The LDAP directory and menus may be stored on messaging system 102.
Since the LDAP protocol allows for a distributed directory, the menus may alternatively be stored on other devices, such as server 104 or database 105, that are coupled to messaging system 102 via network 106.

When a user accesses messaging system 102, the system verifies that the user is approved to access messages or other information and then pull up a telephone interface for the user. Using the present invention, the interface, or TUI, may be the same for every user. However, in a preferred embodiment, the system provides a unique user interface that is based upon the user; the user's company, department or division; the user's country; the user's time zone; or other parameters. Using LDAP, the user's interface can be modified or configured to mimic other interfaces so that the features and options that are available on other systems appear in an identical or similar manner when the user accesses system 102.

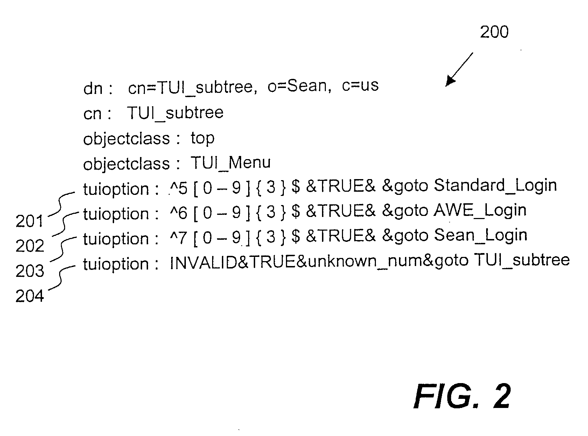

Figure 2 is an LDAP representation of an exemplary top level menu 200 that is used in one embodiment of the invention. The menu of Figure 2 represents an the LDAP directory entry. When a user access the messaging system, menu 200 directs the system to an initial log-in menu for the user. Menu 200 uses text or digits that are entered by the user to determine which log-in menu to access. One of skill in the art will understand that, instead of having the user enter a text or digit string, the system could also detect information from the incoming call, such as a dialed number, calling number, caller ID, Automatic Number Identification (ANI), Dialed Number Identification Service (DNIS) or other call information, to determine which log-in menu to use.

The three tuioption (telephone user interface option) attributes 201, 202, 203 are used to call one of three log-in menus. The tuioption attributes are written as regular expressions. The symbol "^" indicates the beginning of a text string to match. The symbol "$" signifies the end of the text string. The text string may be comprised of any alphanumeric characters or symbols. The [0-9] expression represents any number between 0 and 9, and the {3} repeats the previous expression three times. For example, the expression "^7[0-9][3}$" in tuioption 201 instructs the system to match any number between 7000 and 7999. In a preferred embodiment, digits or digit strings that must exactly match a directory entry would be bracketed by "^" and "$".

The "&" symbol is used in the tuioption attributes to separate individual fields. The tuioption attributes have the following basic structure:
tuioption: <variable or text string> & <boolean expression> & <message or announcement to play to user> & <action to take>.

The tuioption attribute fields may be blank. For example, if there is no message to play or no action to take under certain conditions. Also, the boolean expression may be set to a default condition. For example, a boolean value TRUE may be used, if a particular tuioption is always valid. Announcements may be stored locally on the same memory that holds the LDAP directory, or they may be stored on other devices.

The tuioption attributes 201, 202, 203 direct the system to go to a particular log-in menu. Tuioption attributes 201-203 use information that is entered by the user upon accessing the system. If the user enters a four-digit string of numbers between 5000-5999, then tuioption 201 directs the system to go to a standard log-in menu. If the user enters a four-digit string between 6000-6999 or between 7000-7999, then tuioptions 202 and 203, respectively, direct the system to go to other log-in menus.

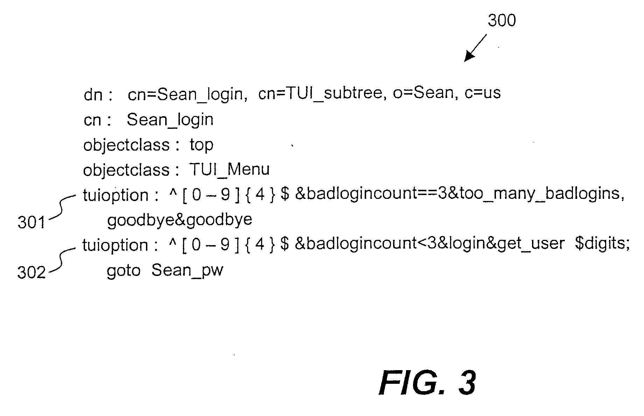

The actions for the tuioption attributes are "goto" expressions. For example, the "goto Sean_Login" phrase in tuioption 203 directs the system to play a LDAP directory entry with a "cn: Sean_Login" attribute. This is entry is discussed below with respect to Figure 3. In alternative embodiments, the goto statement could refer to a complete "dn" or distinguished name instead of citing just the "cn" attribute.

In menu 200, all of the defined actions take place all of the time so the boolean values in the three tuioption attributes are set to TRUE. It will be understood that additional features, such as an introduction announcement or a message prompting the user to enter an identification, could also be added to menu 200. However, to simplify the example, these are not shown in Figure 2.

One of skill in the art will understand that the tuioption attributes are not limited to a four-digit string. Instead, any number of digits, characters or symbols may be used to determine which log-in to use. Furthermore, it will be understood that this parameter does not have to be entered by the user. Instead, the four digit string or other information could be detected automatically by the system using data associated with the call, such as ANI, DNIS or other call information.

The INVALID option 204 represents a special case for all menus to handle the situation in which the entry does not match any of the expected valid prompts. The INVALID case plays its prompt (i.e. *unknown_num*) only after it is determined that the user-entered text string does not match one of the conditions defined in tuioptions 201-203. In the INVALID case, tuioption 204 directs the system to return to the main menu, *TUI_subtree.*

Figure 3 is an exemplary embodiment of an LDAP directory entry for a log-in prompt, 300. In this example, a log-in prompt, Sean_Log-in, corresponding to tuioption 203 is used. There is no set order in which the options should appear, so the designer must be careful not to include multiple prompts that could occur simultaneously. Tuioption 301 is used for the case where a user has attempted to log-in to the system a number of times, but has failed to properly complete the log-in process. Tuioption 301 expects four digits for the log-in (i.e. *^[0-9]{4}$*). If the *badlogincount* variable equals three, then the announcement in line 301 is played. This is a compound announcement consisting of the announcements named *too_many_badlogins* and *goodbye.* Technically, the system has allowed the user to enter four digits, but no matter what digits are entered, the system will still hang up on the user in the action *goodbye.*

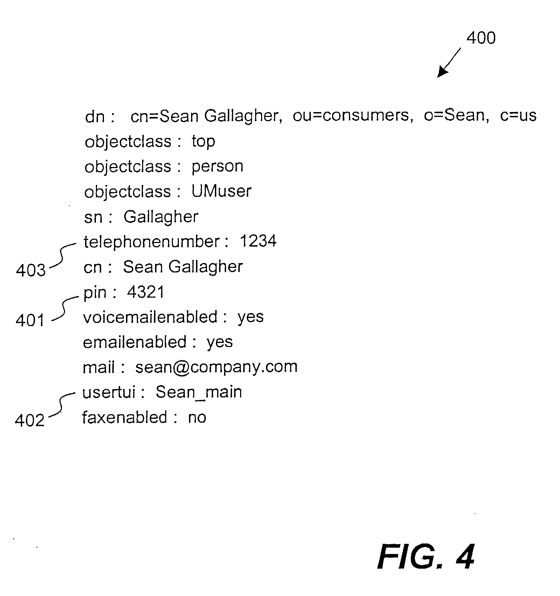

Tuioption attribute 302 plays an announcement, named login, if the badlogincount variable is less than three. After the announcement, when the user enters a digit string, the *get_user $digits* command is executed. The *get_user $digits* command is a function that tells the system to retrieve user information for the user whose telephone number matches the user-entered digit string. In this example, Figure 4 represents a user entry 400. LDAP directory entry 400 will be retrieved if the user-entered digit string, *$digits,* corresponds to telephone number 403.

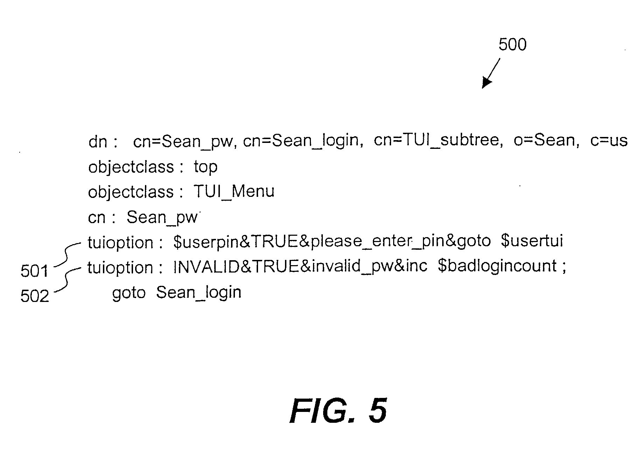

The *get_user $digits* command is followed by the *goto Sean_pw* command, which directs the system to play an LDAP directory entry with the "cn=Sean_pw" attribute. In this embodiment, Figure 5 represents such an entry.

Figure 4 is an LDAP directory entry 400 that represents a user account. The user account 400 comprising data that is used by the system in order to present the correct interface to the user. The information in user account 400 allows the system to create a customized interface with a unique set of prompts for the user. According to a preferred embodiment, the user's customized interface can be modified by changing the attributes of user account 400.

Figure 5 is an exemplary password prompt LDAP directory entry 500. This menu has the same basic structure as the Sean_Login prompt of Figure 3. Tuioption 501 uses the variable *$userpin,* which is pulled from the user account that was selected in the get_user *$digits* command from the log-in directory entry. The value of *$userpin* is the same as the user's "pin" 401. This situation is an example of a first prompt (i.e. prompt 300) setting up data for a second prompt (i.e. prompt 500). If the user account was not found using the *get_user $digits* command, such as when no such account exists or when the wrong account information is entered following the *log-in* announcement in tuioption attribute 302, then the *$userpin* is set to NULL, and the user will not be able to match the variable no matter what password the user enters.

If the user enters a correct password (i.e. a password that matches *$userpin,* which corresponds to *pin* 401), then the system will execute the *goto $usertui* command in line 501. The *$usertui* value is another entry in the user's account (e.g. 402, Figure 4) that defines which Telephone User Interface (TUI) tree the user wishes to use.

In tuioption attribute 502, if the user enters an incorrect password, the *inc $badlogincount* command is executed. This increases the value of the *$badlogincount* variable that is referenced in menu 300. Tuioption 502 then executes the command *goto Sean_Login* to return the user to LDAP directory entry 300 of Figure 3. The *$badlogincount* variable is used in the *Sean_Login* prompt to determine whether the call should be dropped or not because of too many failed log-in attempts.

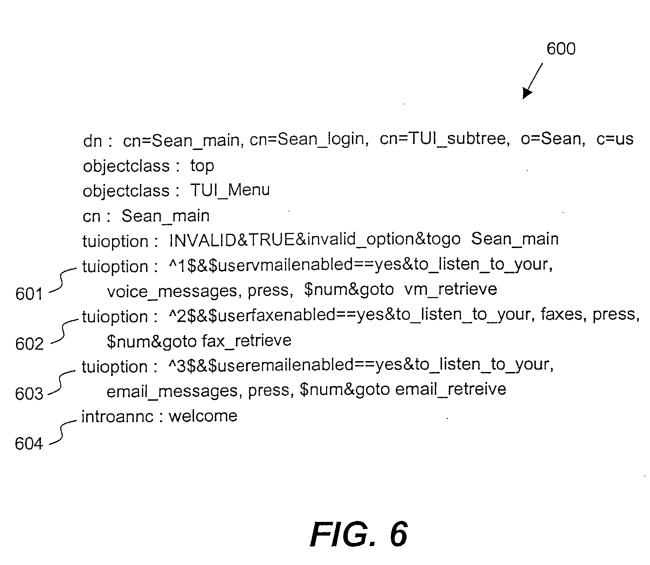

In the present example, entry 402 in user account 400 defines *usertui* as "Sean_main." Accordingly, assuming that the correct log-in and password have been entered, tuioption attribute 501 directs the system to *goto $usertui,* which, in effect, directs the system to *goto Sean_main* or to use the menu with a "cn: Sean_main" attribute. In the exemplary system, directory entry 600 in Figure 6 is the main user interface menu for the user. Menu 600 includes an initial announcement *introannc* 601. This causes the message *welcome* be played before any other announcement.

Tuioption attribute 602 uses *^1$* as the initial option. This means that the digit "1" is the expected response. The boolean expression is *uservmailenabled==yes,* so the announcement will only be played if the user has permission to use voice mail. The *$uservmailenabled* variable is populated by the *get_user* function that is executed in the log- in prompt as part of tuioption 302. If the user is not authorized to use voice mail or if voice mail is not enabled, then *the $uservmailenabled* value will be FALSE and the user will not receive this option.

The announcement that is played in tuioption attribute 602 is a compound message that ends in *$num*. This variable tells the system to play whatever number is expected as a response. This method allows for dynamic number selection so that any telephone key could be used. The action that is performed is *vm_retrieve*, which could call a function for playing voice mail messages. Tuioption 603 is an example attribute that allows the user to retrieve fax messages, and tuioption 604 allows the user to retrieve e-mail messages.

Although the exemplary embodiment describe in the specification is a unified messaging system, one of skill in the art will understand that other types of user interfaces may be implemented using LDAP menus. For example, LDAP menus could be used to provide a user interface for a banking or other financial system. In such as system, the LDAP menus would be configured to provide account balances, fund transfers and other information.

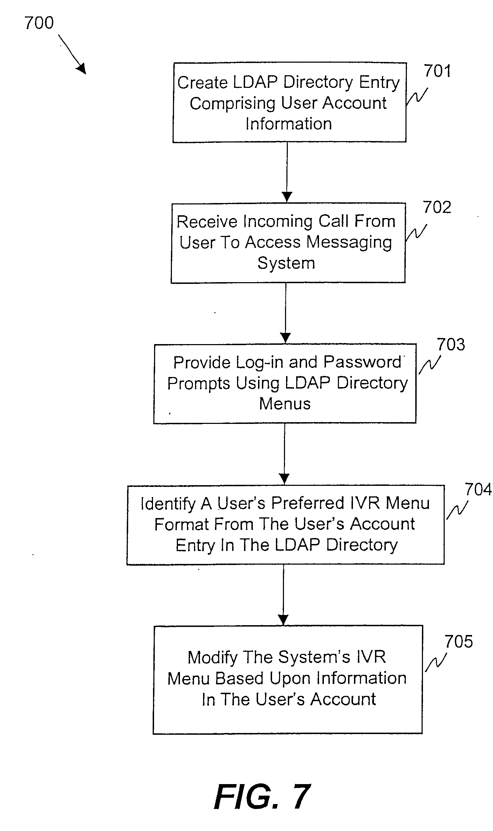

Figure 7 is a flow chart 700 that illustrates the steps required to implement one embodiment of the invention. Flow chart 700 is useable in a messaging system to provide customized IVR menus to users. In step 701, the user or a system administrator creates a user account entry in the LDAP directory. The directory entry comprises user account information, such as system access levels, passwords, selected services, and the like. In step 702, the system receives an incoming call from a user. The system then provides log-in and password prompts to the user to verify the user's authorization to access the system. The log- in and password menus are preferably embodied as LDAP directory entries.

Once a user has been identified, in step 704, a preferred IVR menu format for the user is identified from information in the user's account entry in the LDAP directory. This information is then used to modify the system's IVR menu in step 705. This allows the user to do such things as select the order in which options are provided to the user, to modify the announcements in the system prompts, to select between key press (i.e. DTMF) and voice responses to IVR prompts, and the like.

As a result, a new user can modify the system's IVR menus to mimic the menus of other systems with which the user is familiar, thereby avoiding the need for the user to learn new menus and prompts for a new system. The user could also select between long and short prompts in the announcement messages. For example, the user would have the option of hearing a long announcement (e.g. "To access your voice mail, please press 1; to access your e-mail please press 2; ...") or a short announcement (e.g. "Voice Mail 1; E-mail 2,.."). This would allow an expert or frequent user to simplify the system menus, while allowing new users to use longer prompts with more detailed explanation. This simplification can be easily accomplished by modifying the user account directory entry or one of the user's menu directory entries.

It will be understood that the user account LDAP directory entry and the LDAP menu entries can be modified in numerous ways. In one embodiment, the user or a system administrator may use a text editor software application to open the LDAP directory entry that is being modified. The text of the directory entry may then be modified as desired to achieve the desired menu prompts. In a similar manner, the telephone number, password, personal identification number (PIN), or other attributes in the user account LDAP directory entry and menu LDAP directory entries can be modified.

Alternatively, the host messaging system, such as message server 102, may provide a configuration interface so that the user may select features of a desired user interface. The host messaging system would then create the appropriate user account LDAP directory entry and/or menu LDAP directory entries to provide the selected user interface features. The configuration interface may be presented via the user's telephone 101. For example, the messaging system may prompt the user to enter a telephone number and PIN, or the user may be prompted to enable various messaging options, such as voice mail, e-mail or fax messages. The messaging system would then use these inputs to create the proper directory entries.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A system for providing at least one user interface using a Lightweight Directory Access Protocol (LDAP), comprising:
one or more user account LDAP directory entries having information identifying approved user access to available services and having information related to preferred menu configurations;
one or more log-in menu LDAP directory entries, each providing information related to an initial menu for a user and each identifying a selected one of said user account LDAP directory entries; and
one or more main menu LDAP directory entries, each providing prompts for a user interface menu that is presented to a particular user, wherein the prompts for the user interface menu are identified using information stored in the selected user account LDAP directory entry.

2. The system of claim 1 wherein said user interface menu is an Interactive Voice Response (IVR) menu.

3. The system of claim 1 further comprising:
configuration means for creating LDAP directory entries based upon selected user interface options.

4. The system of claim 3 wherein said configuration means further comprises:
means for modifying existing directory entries to modify an existing user interface.

5. The system of claim 1 wherein said user account LDAP directory entries comprise an attribute identifying a user telephone number, and an attribute identifying a user interface menu LDAP directory entry, wherein the user interface menu directory entry includes attributes representing user interface prompts selected by the user; and
wherein said main menu LDAP directory entries comprise one or more attributes that cause an announcement to play when a user enters a designated text string.

6. A method for providing a user interface using a Lightweight Directory Access Protocol (LDAP), comprising:
creating a user account LDAP directory entry having information associated with a system user, the user account entry identifying system services that are available to the user and having information related to a preferred interface configuration for the user;
accessing a log-in menu LDAP directory entry having attributes that direct the system to identify a user and to associate the user with the user account LDAP directory entry;
accessing a main menu LDAP directory entry having attributes that provide a customized user interface using the preferred interface configuration information in the user account entry.

7. The method of 6 further comprising:
accessing a password menu LDAP directory entry having attributes for verifying a user's authorization to access the system.

8. The method of 6 wherein said customized user interface is an Interactive Voice Response (IVR) menu.

9. The method of claim 6 further comprising:
modifying a user account LDAP directory entry.

10. The method of claim 9 wherein the user account LDAP directory entry is modified to when a user changes the configuration of a user interface.
